Europäisches Patentamt

**European Patent Office**

Office européen des brevets

(19)

(11) Publication number: **0 013 116**
A1

(12) # EUROPEAN PATENT APPLICATION

(21) Application number: **79302935.6**

(22) Date of filing: **18.12.79**

(51) Int. Cl.³: **A 01 D 53/06**
**A 01 D 75/20**

(30) Priority: **28.12.78 GB 5015278**

(43) Date of publication of application:
**09.07.80 Bulletin 80/14**

(84) Designated Contracting States:
**AT BE CH DE FR GB IT LU NL SE**

(71) Applicant: **RANSOMES SIMS & JEFFERIES LIMITED**
**Nacton Works**
**Ipswich IP3 9QG(GB)**

(72) Inventor: **Jupp, Robert Alfred**
**8 Church Close**
**Ipswich, Suffolk IP10 0DU(GB)**

(74) Representative: **Coleman, Stanley et al,**
**MATHYS & SQUIRE 10 Fleet Street**
**London EC4Y 1AY(GB)**

(54) **Rotary grass mowing machines.**

(57) A rotary grass mowing machine of the kind comprising a casing (3) providing a chamber (11) with a downwardly facing inlet (13) and a lateral passage (15) extending from the chamber, and having a blade (5) disposed within the chamber and rotatable so as to sweep a plane disposed generally parallel to the ground (8). In order to avoid danger from stones discharged with cuttings through the passage, an upright deflector (31) suitably made of plastic, or a hinged metal sheet, is mounted within and extends across the passage in a lower part thereof. The deflector is spaced a substantial distance from the plane swept by the blade so that stones struck during rotation of the blade are projected against the deflector and fall to ground whilst cuttings entrained in the air flow are discharged through the passage above the deflector. A baffle (27) may also be provided to prevent stones passing above the deflector.

FIG 2

EP 0 013 116 A1

- 2 -

This invention relates to rotary grass mowing machines and particularly to rotary grass mowing machines comprising a casing, having a top and a depending skirt which together provide a chamber with a downwardly facing inlet and a lateral passage extending from the chamber for discharge of cuttings, a rotatable blade disposed within the chamber of the casing and a driving shaft extending through the top of the casing and on which the blade is mounted so as to sweep a plane which in operation is disposed generally parallel to the ground and to cause a flow of air through the inlet transversely with respect to said plane. Machines of the kind set forth may be provided with more than one rotatable blade within the casing and may also be provided in the form of a pedestrian controlled machine, or as a ride-on machine which is adapted to be mounted on a self-propelled vehicle, when a number of mowing machines may be arranged to afford an increased width of swath. With the ride-on type of machine, the rotary grass mowing machine may be one of a number of alternative pieces of equipment for use with a basic tractor unit. Alternatively, the basic tractor unit may be fitted up with one or more rotary heads as a specialised machine for grass cutting only.

Inherent in many machines of the above kind is the danger of stones or other heavy objects hit by the blade being projected at high speed through the lateral passage. A variety of ways of reducing this danger have been proposed. For example, in some machines, stones entering the discharge passage with cuttings are directed up to the roof, and they are there given a downward component of momentum and exit from the passage to fall to the ground quite close to the machine so that there is no danger of stones flying upwardly to hit a operator or bystander but a person standing close to the machine is still at risk. Alternatively, a shield of some kind may be provided at the exit of the passage in order to prevent high speed discharge of stones with the cuttings. However, this tends to block the exit, and cause clogging of cuttings although it does reduce the danger of discharge of stones.

According to the present invention there is provided an improved rotary grass mowing machine of the kind set forth, wherein the blade is located adjacent the inlet of the chamber and an upright deflector is mounted within and extends across the lateral passage in a lower part thereof and is spaced a substantial distance from the plane swept by the blade so that stones struck during rotation of the blade are projected against the deflector and fall to ground whilst cuttings entrained in the air flow transverse to the blade pass out of the casing through the lateral passage above the deflector.

Preferably, a baffle is mounted within the chamber above the level of the plane swept by the blade and extends inwardly from the deflector towards the axis of rotation of the blade, and advantageously, in plan view of the machine, the inner edge of the baffle is disposed adjacent the periphery of the plane swept by the blade. The deflector can suitably depend from the baffle.

Advantageously, the deflector is adapted to absorb energy from stones impinging thereon. The deflector may be a hingedly mounted plate and suitably comprises plastics material, such as polyurethane.

To reduce the likelihood of stones being projected beneath the deflector, the lower edge of the deflector is preferably located below the level of the inlet of the chamber.

Preferably, the blade, at respective opposite ends, is formed along the trailing edges thereof with upturned portions serving to enhance air flow transversely with respect to the plane swept by the blade.

In one embodiment of the invention, the machine
is a pedestrian controlled machine and the lateral passage
is tapered from the chamber so as to divert the outflow
of cuttings from the passage away from the pedestrian
controller.  Where the machine is adapted to be mounted on
a self-propelled vehicle, the passage may be tapered or,
alternatively, the width of the passage may be substantially
uniform along its length so as to distribute cuttings over a
wider area.  The outer end portion of the passage may be
inclined upwardly or downwardly from the chamber.

The invention will now be described, by way of
example, with reference to the accompanying, somewhat
diagrammatic drawings in which:

Figure 1 is a plan view of one embodiment of a
rotary grass mowing machine according to this invention;

Figure 2 is a cross-sectional view taken along the
line II-II of Figure 1;

Figure 3 is a plan view of a second embodiment of
the invention;  and

Figure 4 is a cross sectional view taken along the
line IV-IV of Figure 3.

Throughout the drawings like parts are identified
by the same reference numerals.

Referring to the drawings, a rotary grass mowing machine, generally indicated by the reference numeral 1, comprises a casing 3, carried on ground engaging wheels 4, in which is disposed a rotatable blade 5. The casing 3 is formed with a flat top 7 and a peripheral depending skirt 9 of substantial depth. The top 7 and skirt 9 together form a chamber 11 with a downwardly facing inlet 13. A lateral passage 15, for the discharge of cuttings, extends from the the chamber 11.

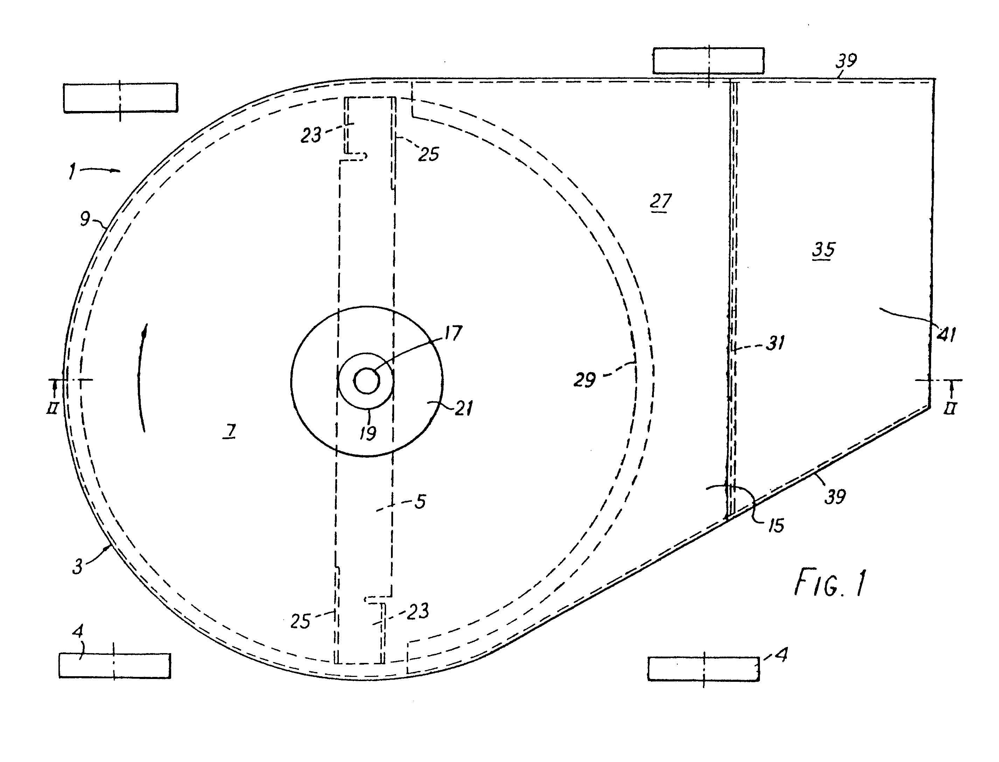

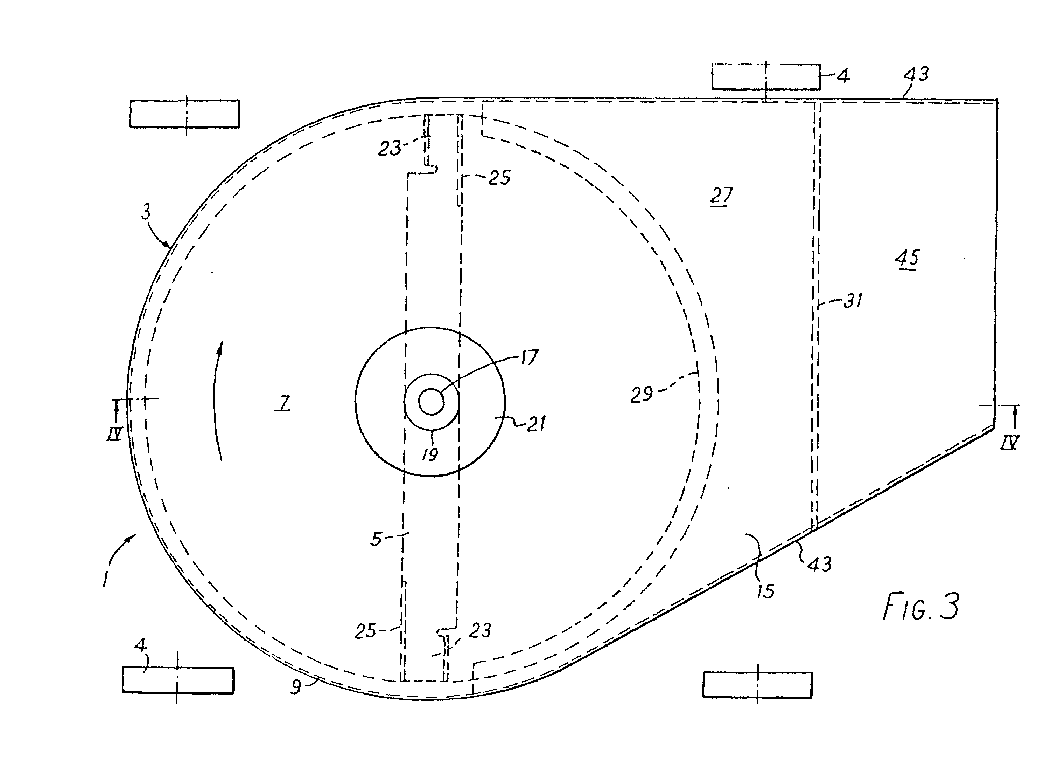

The rotatable blade 5 is disposed within the chamber 11 of the casing, and is mounted on a driving shaft 17 which is located in an upright bearing 19 supported at right angles to the top 7 of the casing. The shaft 17 projects through the top 7 where there is provided a pulley 21 keyed to the shaft and by means of which a belt drive may be provided which is coupled to a driven member on a vehicle on which the machine is mounted. The blade is mounted on the shaft so that, in operation, the belt drive causes the blade to rotate, sweeping a plane generally parallel to the casing top 7 and during cutting the plane will be parallel, or approximately so, with the ground 8. The rotation of the blade causes a flow of air through the inlet 13 transversely with respect to the plane swept by the blade. This axial flow of air is appreciably enhanced by the provision, at respective opposite ends of the blade, along the trailing edges thereof, of upturned portions 23, which are upwardly and rearwardly inclined with respect to the direction of cutting motion of the blade, indicated by an arrow in Figures 1 and 3, and which effectively serve as fan blades.  The blade is mounted on the lower end of the shaft 17 at a relatively low level in relation to the depth of the chamber 11, and is located adjacent the inlet 13 of the chamber.  In operation, the blade rotates and grass is cut by cutting edges 25 formed on the leading edges of the blade at respective opposite ends.  Stones and other matter may also be hit by the leading edges of the blade and be raised above the level of the plane swept by the blade.

Within the chamber 11 and above the level of the plane swept by the blade 5, there is provided a baffle 27 which extends within the lateral passage 15 and from the skirt 9 inwardly towards the shaft 17 and parallel with the top of the casing.  An inner edge 29 of the baffle is concentric with the shaft and the blade axis, and, as shown in Figures 1 and 3, in plan view of the machine inner edge 29 is disposed adjacent the periphery of the plane swept by the blade.  The baffle inhibits the passage of stones, impacted by the blade, through the passage 15.

- 8 -

An upright deflector 31 is mounted within the
lateral passage 15 so as to depend by means of a bracket 33
at its upper edge from the baffle 27. The deflector extends
across the full width of the passage 15 in a lower part
thereof so that stones projected towards the lower part
of the passage impinge upon the deflector and are deflected
to the ground instead of passing out of the machine with
cuttings through exit 35 of the passage. The deflector
is spaced a substantial distance from the plane swept by
the blade and consequently stones hit by the blade and
entering the passage generally acquire, prior to contacting
the deflector, a downward component of velocity and fall
below the level of the upper part 36 of the passage above
the deflector. The deflector extends across the lower
part of the passage 15 so as to provide an unimpeded path
for cuttings through the upper part 36 of the passage,
thereby reducing the risk of clogging. The baffle 27 acts
as a safety measure to ensure that few, if any, stones
which are projected upwards by the blade pass above the
deflector 31. Cuttings, however, are entrained in the
air flow transverse to the blade, are lifted above the
level of the baffle 27 and pass out of the casing through the upper part 36 of the lateral passage above the
deflector 31. Thus stones, which are not so uplifted,
are separated from the cuttings and are projected beneath
the baffle to the deflector. The stones generally already
have a downward component of velocity and so they are
deflected towards the ground 8. The deflector is formed
of a tough polyurethane sheet which absorbs energy from
stones, so that even if stones are moving upwardly when
they hit the deflector, they will fall to ground after
impact. The deflector may be hingedly supported along
its upper edge by the baffle, to assist in absorbing
impact of stones. By reason of the fact that the deflector
is spaced a substantial distance from the sweep of the
blade, the stones, after hitting the deflector, do
not pass back into the plane swept by the blade so that
the probability of stones being hit a second or even a
third time by the blade is very small so that the working
life of the blade is extended. Instead, the stones fall
from the deflector to the ground 8. The lower edge 37
of the deflector is located below the level of the inlet 13
to reduce the danger of stones passing beneath the deflector
and injuring an operator or bystander.

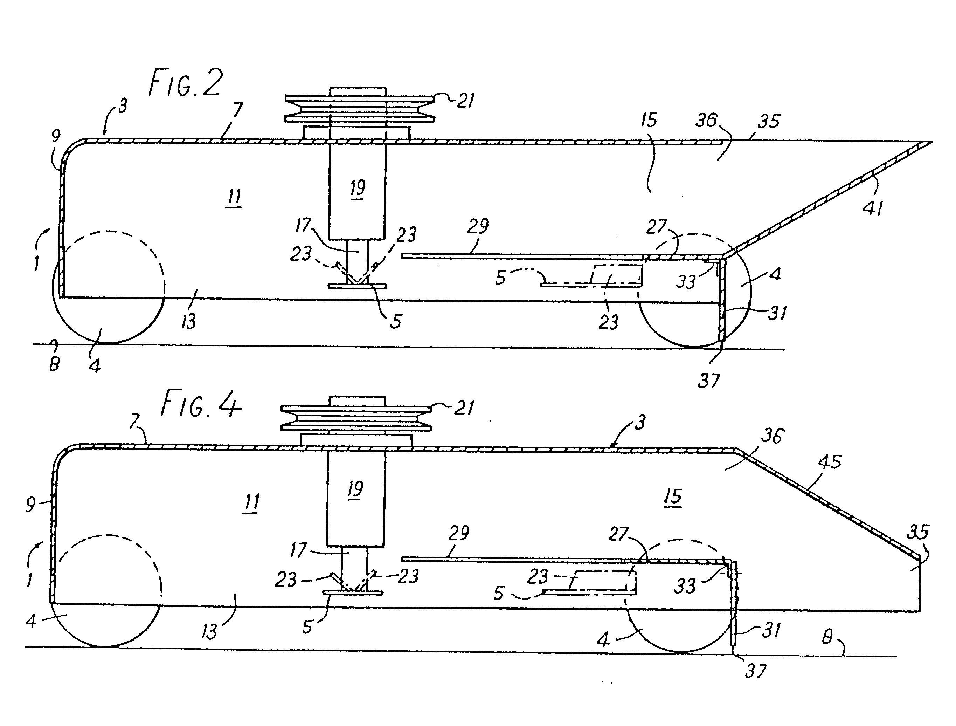

The two embodiments of the invention which are illustrated respectively provide for upward and downward discharge of cuttings. To this end in the embodiment depicted in Figures 1 and 2 an outer end portion of the passage 15 is upwardly inclined from the chamber, and is formed by upright side walls 39 and a bottom part 41 which extends upwardly from the baffle and the upper edge of the deflector to the exit 35 of the passage. The embodiment of Figures 3 and 4 by contrast has an outer end portion of the passage 15 downwardly inclined from the chamber, with upright side walls 43 and a top part 45 which extends downwardly from the top wall 7 of the casing to the exit 35.

In both of the machines illustrated, the passage is provided at the rear of the machine, relative to forward motion thereof. The machines are suitable for pedestrian control and the passage is tapered from the chamber so as to divert the outflow of cuttings from the exit 35 of the passage away from the pedestrian controller. In a pedestrian controlled machine, however, the pulley 21 may be replaced by a motor, and the shaft 17 may be the engine shaft. Where the machine is adapted to be mounted on a self-propelled vehicle, for example as a ride-on machine on a tractor, the passage may be tapered, as shown, to direct the cuttings in a particular direction or, alternatively, the side walls of the passage may be parallel so that the passage is of uniform width along its length to scatter cuttings over a wider area.

In operation, the blade 5 is rotated at a speed, normally around 3000 r.p.m., which is sufficient to cause a substantial draught of air transverse to the blade. Grass and like cuttings, cut by the cutting edges 25, are lifted well above the level of the plane swept by the blade so that they pass above the baffle and into the upper part 36 of the lateral passage 15 above the top of the deflector 31, to leave the machine through the exit 35 of the passage. In the embodiment illustrated in Figures 1 and 2 the outer end portion of the passage is upwardly inclined and the cuttings are scattered over the ground, whilst in the machine of Figures 3 and 4 the outer end portion of the passage inclines downwardly and cuttings are deposited on the ground.

Stones and other objects which enter the chamber after impact by the blade are not caught up in the air flow. Some are projected against the skirt 9 of the casing whilst others are projected towards the lateral passage. Of these, a proportion will hit the baffle and be deflected downwardly but in any case most of the stones will be moving downwards by the time they reach the deflector which is spaced a substantial distance from the plane swept by the blade. On impact, the deflector absorbs energy from the stones, which fall safely to ground without re-entering the plane swept by the blade. Accordingly, cuttings and stones are separated within the machine so that cuttings leave via passage 15 and exit 35, whilst stones fall back to ground.

Those skilled in the art will appreciate that many changes may be incorporated in the embodiments of the invention described without departing from the scope of the invention. Thus, for example, the drive to the shaft 17 may be a chain drive. The shape of the baffle 27 may differ appreciably from that shown, as may the mode of mounting the deflector within the passage. Also, the form of the passage may be varied although it would normally extend from the rear of the machine relative to forward motion thereof. Whilst the machine described is mounted on wheels 4, in the case where the machine or several machines are supported on a ride-on vehicle, ground engaging skids could replace the wheels to facilitate floating of machine or machines over the ground contours.

0013116

- 13 -

CLAIMS:

1.      A rotary grass mowing machine (1) comprising a casing
(3), having a top (7) and a depending skirt (9) which together
provide a chamber (11) with a downwardly facing inlet (13) and
a lateral passage (15) extending from the chamber for discharge of
cuttings, a rotatable blade (5) disposed within the chamber of
the casing and a driving shaft (17) extending through the top
of the casing and on which the blade is mounted so as to
sweep a plane which in operation is disposed generally parallel
to the ground (8) and to cause a flow of air through the inlet
transversely with respect to said plane, characterised in that
the blade is located adjacent the inlet of the chamber and an
upright deflector (31) is mounted within and extends across the
lateral passage in a lower part thereof and is spaced a substantial
distance from the plane swept by the blade so that stones struck
during rotation of the blade are projected against the deflector
and fall to ground whilst cuttings entrained in the air flow
transverse to the blade pass out of the casing through the
lateral passage above the deflector.

2.      A rotary grass mowing machine as claimed in claim 1,
characterised in that a baffle (27) is mounted within the chamber
above the level of the plane swept by th· blade and extends inwardly from the deflector towards the axis of rotation of the blade.

3.      A rotary grass mowing machine as claimed in claim 2, characterised in that the inner edge (29) of the baffle, in plan view of the machine, is disposed adjacent the periphery of the plane swept by the blade.

4.      A rotary grass mowing machine as claimed in claim 2 or claim 3, characterised in that the deflector depends from the baffle.

5.      A rotary grass mowing machine as claimed in any preceding claim, characterised in that the deflector is adapted to absorb energy from stones impinging thereon.

6.      A rotary grass mowing machine as claimed in claim 5, characterised in that the deflector comprises a hingedly mounted plate.

7.      A rotary grass mowing machine as claimed in any preceding claim, characterised in that the deflector comprises plastics material.

8.      A rotary grass mowing machine as claimed in any preceding claim, characterised in that the lower edge (37) of the deflector is located below the level of the inlet of the chamber.

9.     A rotary grass mowing machine as claimed in any preceding claim, characterised in that the blade, at respective opposite ends, is formed along the trailing edges thereof with upturned portions (23) serving to enhance air flow transversely with respect to the plane swept by the blade.

10.     A rotary grass mowing machine as claimed in claim 9, characterised in that the upturned portions of the blade are upwardly and rearwardly inclined with respect to the direction of cutting motion of the blade.

11.     A rotary grass mowing machine as claimed in any preceding claim, characterised in that the lateral passage is tapered from the chamber.

12.     A rotary grass mowing machine as claimed in any one of claims 1 to 10, characterised in that the width of the passage is substantially uniform along its length.

13.     A rotary grass mowing machine as claimed in any preceding claim, characterised in that an outer end portion (39, 41) of the passage inclines upwardly from the chamber.

14.     A rotary grass mowing machine as claimed in any one of claims 1 to 12 wherein an outer end portion (43, 45) of the passage inclines downwardly from the chamber.

0013116

FIG. 1

FIG.2

FIG.4

0013116

FIG. 3

# EUROPEAN SEARCH REPORT

**0013116**

Application number

EP 79 30 2935

## DOCUMENTS CONSIDERED TO BE RELEVANT

| Category | Citation of document with indication, where appropriate, of relevant passages | Relevant to claim |
|---|---|---|
| X | US - A - 3 646 740 (GRIMES) <br> * In its entirety * | 1-4,8 |
| X | US - A - 3 760 572 (MARION) <br> * Column 2, line 4 - column 3, line 43; figure 2 * | 1,8-10, 14 |
|  | US - A - 2 791 080 (SHAW) <br> * Column 1, line 72 - column 2, line 6; column 2, lines 27-31; figure 3 * | 1,4, 8-10 |
|  | US - A - 2 864 226 (BRIGHT) <br> * Column 4, lines 9-19; figure 3 * | 2,3 |
|  | US - A - 3 696 595 (DAHL) <br> * Column 4, line 44 - column 5, line 9 * | 2,3 |
|  | US - A - 2 963 842 (ESTES) <br> * Column 1, lines 30-42; column 2, line 59 - column 3, line 12 * | 1,5-8 |
|  | US - A - 3 378 995 (WELSH) <br> * Column 2, lines 50-72; column 3, lines 29-41 * | 1,5-8 |

./.

### CLASSIFICATION OF THE APPLICATION (Int. Cl.)

A 01 D 53/06
75/20

### TECHNICAL FIELDS SEARCHED (Int.Cl.)

A 01 D

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-03-1980 | DE LAMEILLEURE |

EPO Form 1503.1  06.78

| DOCUMENTS CONSIDERED TO BE RELEVANT | | | CLASSIFICATION OF THE APPLICATION (Int. Cl. ) |
|---|---|---|---|
| Category | Citation of document with indication, where appropriate, of relevant passages | Relevant to claim | |
| | US - A - 3 646 739 (DAHL) <br> * Column 6, lines 66-75 * <br><br> ---- | 5 | |
| | | | TECHNICAL FIELDS SEARCHED (Int. Cl. 3) |